# EUROPEAN PATENT APPLICATION

(11) **EP 4 518 453 A1**
(43) Date of publication of application: **05.03.2025**
(21) Application number: 23796783.1
(22) Date of filing: 26.04.2023
(51) Int. Cl.: H04W 52/02, H04W 72/23, H04W 72/04, H04W 76/28, H04L 5/00

(54) **METHOD, USER EQUIPMENT, PROCESSING DEVICE, AND STORAGE MEDIUM FOR RECEIVING DOWNLINK SIGNAL, AND METHOD AND BASE STATION FOR TRANSMITTING DOWNLINK SIGNAL**

(30) Priority: 28.04.2022 US 202263336273 P; 11.08.2022 KR 20220100826; 29.09.2022 KR 20220124777; 03.11.2022 KR 20220145581
(71) Applicant: LG Electronics Inc., Yeongdeungpo-gu Seoul 07336 (KR)
(72) Inventor: CHOI, Seunghwan, Seoul 06772 (KR); YANG, Suckchel, Seoul 06772 (KR); KIM, Seonwook, Seoul 06772 (KR); MYUNG, Sechang, Seoul 06772 (KR); HWANG, Seunggye, Seoul 06772 (KR)
(74) Representative: Maikowski & Ninnemann Patentanwälte Partnerschaft mbB
(86) International application number: PCT/KR2023/005658
(87) International publication number: WO 2023/211140

(57) **Abstract**

A UE may include: performing PDCCH monitoring; detecting a DCI format for a cell in which a first BWP is active; and performing BWP switching to change the active BWP of the cell from the first BWP to a second BWP on the basis of the DCI format including a switching-related indication. The DCI format including the switching-related indication may be detected only in a common search space rather than a search space specific to the UE.

## Description

### TECHINICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

As new radio communication technology has been introduced, the number of UEs to which a BS should provide services in a prescribed resource region is increasing and the volume of data and control information that the BS transmits/receives to/from the UEs to which the BS provides services is also increasing. Since the amount of resources available to the BS for communication with the UE(s) is limited, a new method for the BS to efficiently receive/transmit uplink/downlink data and/or uplink/downlink control information from/to the UE(s) using the limited radio resources is needed. In other words, due to increase in the density of nodes and/or the density of UEs, a method for efficiently using high-density nodes or high-density UEs for communication is needed.

As the number of services/UEs that a network should support increases rapidly, the need for energy saving of the network as well as the UE's power saving is gradually increasing.

The objects to be achieved with the present disclosure are not limited to what has been particularly described hereinabove and other objects not described herein will be more clearly understood by persons skilled in the art from the following detailed description.

### Technical Solution

In one technical aspect of the present disclosure, provided is a method of receiving a downlink signal by a user equipment in a wireless communication system. The method may include performing Physical Downlink Control Channel (PDCCH) monitoring, detecting a Downlink Control Information (DCI) format for a cell having a first Bandwidth Part (BWP) active therein based on the PDCCH monitoring, and performing BWP switching to switch an active BWP of the cell from the first BWP to a second BWP based on the DCI format including a switching related indication, wherein the DCI format including the switching related indication may be detected not in a search space specific to the user equipment but in a common search space only.

In another technical aspect of the present disclosure, provided is a user equipment receiving a downlink signal in a wireless communication system. The user equipment may include at least one transceiver, at least one processor, and at least one computer memory operably connected to the at least one processor and storing instructions causing the at least one processor to perform operations when executed. The operations may include performing Physical Downlink Control Channel (PDCCH) monitoring, detecting a Downlink Control Information (DCI) format for a cell having a first Bandwidth Part (BWP) active therein based on the PDCCH monitoring, and performing BWP switching to switch an active BWP of the cell from the first BWP to a second BWP based on the DCI format including a switching related indication, wherein the DCI format including the switching related indication may be detected not in a search space specific to the user equipment but in a common search space only.

In another technical aspect of the present disclosure, provided is an apparatus for processing in a wireless communication system. The apparatus may include at least one processor and at least one computer memory operably connected to the at least one processor and storing instructions causing the at least one processor to perform operations when executed. The operations may include performing Physical Downlink Control Channel (PDCCH) monitoring, detecting a Downlink Control Information (DCI) format for a cell having a first Bandwidth Part (BWP) active therein based on the PDCCH monitoring, and performing BWP switching to switch an active BWP of the cell from the first BWP to a second BWP based on the DCI format including a switching related indication, wherein the DCI format including the switching related indication may be detected not in a search space specific to the user equipment but in a common search space only.

In another technical aspect of the present disclosure, provided is a storage medium readable by a computer. The storage medium readable by the computer may store at least one computer program code including instructions causing at least one processor to perform operations when executed. the operations may include performing Physical Downlink Control Channel (PDCCH) monitoring, detecting a Downlink Control Information (DCI) format for a cell having a first Bandwidth Part (BWP) active therein based on the PDCCH monitoring, and performing BWP switching to switch an active BWP of the cell from the first BWP to a second BWP based on the DCI format including a switching related indication, wherein the DCI format including the switching related indication may be detected not in a search space specific to the user equipment but in a common search space only.

In another technical aspect of the present disclosure, provided is a computer program stored in a computer-readable storage medium. The computer program may include at least one computer program code including instructions causing at least one processor to perform operations when executed. The operations may include performing Physical Downlink Control Channel (PDCCH) monitoring, detecting a Downlink Control Information (DCI) format for a cell having a first Bandwidth Part (BWP) active therein based on the PDCCH monitoring, and performing BWP switching to switch an active BWP of the cell from the first BWP to a second BWP based on the DCI format including a switching related indication, wherein the DCI format including the switching related indication may be detected not in a search space specific to the user equipment but in a common search space only.

In another technical aspect of the present disclosure, provided is a method of transmitting a downlink signal to a user equipment by a base station in a wireless communication system. The method may include transmitting a Physical Downlink Control Channel (PDCCH) carrying a Downlink Control Information (DCI) format for a cell having a first Bandwidth Part (BWP) active therein and performing BWP switching to switch an active BWP of the cell from the first BWP to a second BWP based on the DCI format including a switching related indication, wherein the DCI format including the switching related indication may be detected not in a search space specific to the user equipment but in a common search space only.

In further technical aspect of the present disclosure, provided is a base station transmitting a downlink signal to a user equipment in a wireless communication system. The base station may include at least one transceiver, at least one processor, and at least one computer memory operably connected to the at least one processor and storing instructions causing the at least one processor to perform operations when executed. The operations may include transmitting a Physical Downlink Control Channel (PDCCH) carrying a Downlink Control Information (DCI) format for a cell having a first Bandwidth Part (BWP) active therein and performing BWP switching to switch an active BWP of the cell from the first BWP to a second BWP based on the DCI format including a switching related indication, wherein the DCI format including the switching related indication may be detected not in a search space specific to the user equipment but in a common search space only.

In each aspect of the present disclosure, the method or the operations may include: performing PDCCH monitoring; detecting a DCI format for a cell in which a first BWP is active based on the PDCCH monitoring; and performing BWP switching to switch the active BWP of the cell from the first BWP to a second BWP based on the DCI format containing a switching related indication.

In each aspect of the present disclosure, the DCI format including the switching-related indication may be detected or transmitted only in a common search space, not in a search space specific to the UE.

In each aspect of the present disclosure, the DCI format may include information regarding a timing point for the BWP switching.

In each aspect of the present disclosure, the operations may include: receiving an RRC configuration for the DCI format. The RRC configuration may include a configuration regarding an NES BWP.

In each aspect of the present disclosure, the second BWP may include the NES BWP.

In each aspect of the present disclosure, the method by the user equipment or the operations of the user equipment, the processing device, or the storage medium may include receiving an HARQ-ACK feedback related configuration for the DCI format. The HARQ-ACK feedback related configuration may include a configuration regarding a PUCCH resource related to the DCI format.

In each aspect of the present disclosure, the method by the base station or the operations of the base station may include transmitting an HARQ-ACK feedback related configuration for the DCI format. The HARQ-ACK feedback related configuration may include a configuration regarding a PUCCH resource related to the DCI format.

In each aspect of the present disclosure, the PUCCH resource may be dedicated to the UE.

In each aspect of the present disclosure, the DCI format may include information related to a timing of transmitting HARQ-ACK information for the DCI format.

The foregoing solutions are merely a part of the examples of the present disclosure and various examples into which the technical features of the present disclosure are incorporated may be derived and understood by persons skilled in the art from the following detailed description.

### Advantageous Effects

According to some implementation(s) of the present disclosure, a wireless communication signal may be efficiently transmitted/received. Accordingly, the total throughput of a wireless communication system may be raised.

According to some implementation(s) of the present disclosure, the number of control channels to be transmitted by a BS to a plurality of UEs and the amount of used communication resources may be reduced. Accordingly, energy of a network may be saved.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates an example of physical downlink shared channel (PDSCH) time domain resource assignment (TDRA) caused by a physical downlink control channel (PDCCH) and an example of physical uplink shared channel (PUSCH) TDRA caused by the PDCCH;
FIG. 7 illustrates bandwidth part types;
FIG. 8 illustrates a Discontinuous Reception (DRX) operation;
FIG. 9 illustrates a flow of DL signal reception in a UE according to some implementations of the present disclosure; and
FIG. 10 illustrates a flow of DL signal transmission in a BS according to some embodiments of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a singlecarrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, that is not configured with CA or DC, only one serving cell including only the Pcell is present. For a UE in RRC_CONNECTED state, that is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH cell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In the present disclosure, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to as a new RAT (NR) or fifth-generation (5G) RAT, and a system using NR or supporting NR is referred to as an NR system.

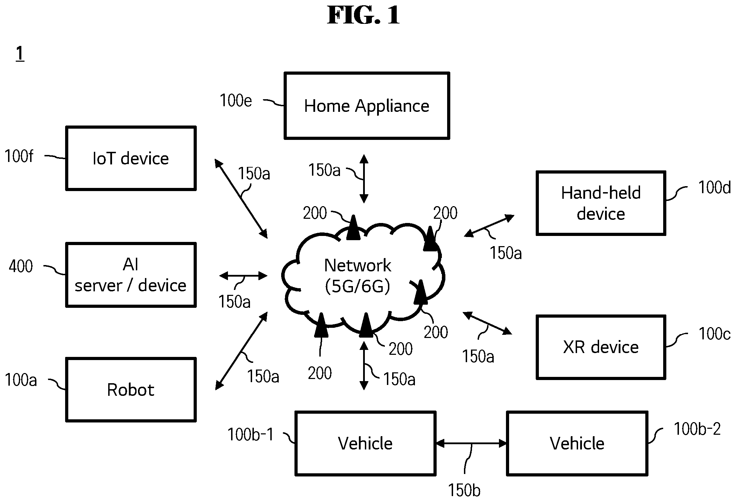

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/SG devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

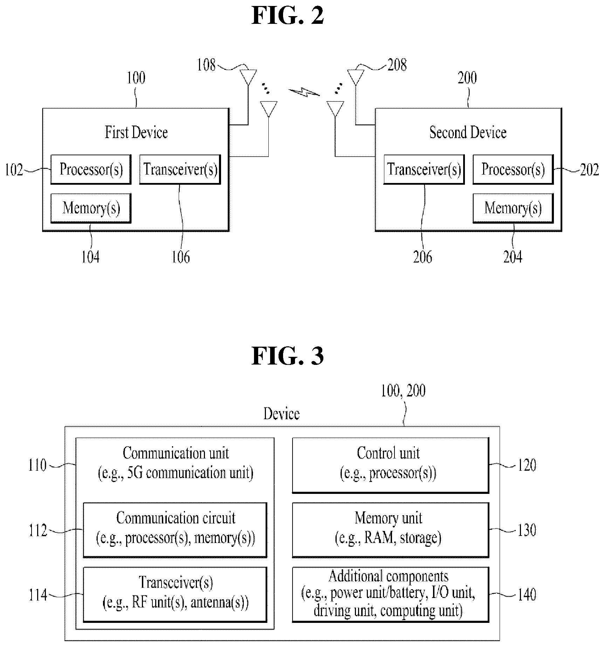

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

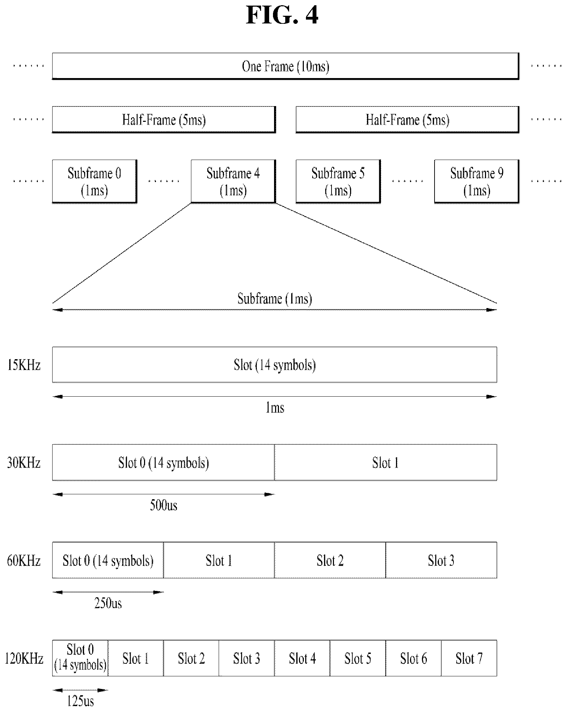

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (Δfₘₐₓ*N_{f}/100)*T_{c} = 10 ms and is divided into two half-frames of 5 ms each. A basic time unit for NR is T_{c} = 1/(Δfₘₐₓ*N_{f}) where Δfₘₐₓ = 480*10³ Hz and N_{f}= 4096. For reference, a basic time unit for LTE is Tₛ = 1/(Δf_{ref}*N_{f,ref}) where Δf_{ref} = 15*10³ Hz and N_{f,ref} = 2048. T_{c} and T_{f} have the relationship of a constant κ = T_{c}/T_{f} = 64. Each half-frame includes 5 subframes and a duration T_{sf} of a single subframe is 1 ms. Subframes are further divided into slots and the number of slots in a subframe depends on an SCS. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing Δf = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the SCS Δf = 2^{u}*15 kHz.

**[Table 2]**

| *u* | *N*^{slot}_{symb} | N^{frame,u}ₛₗₒₜ | *N*^{subframe,u}ₛₗₒₜ |
|---|---|---|---|
| 2 | 12 | 40 | 4 |

For an SCS configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

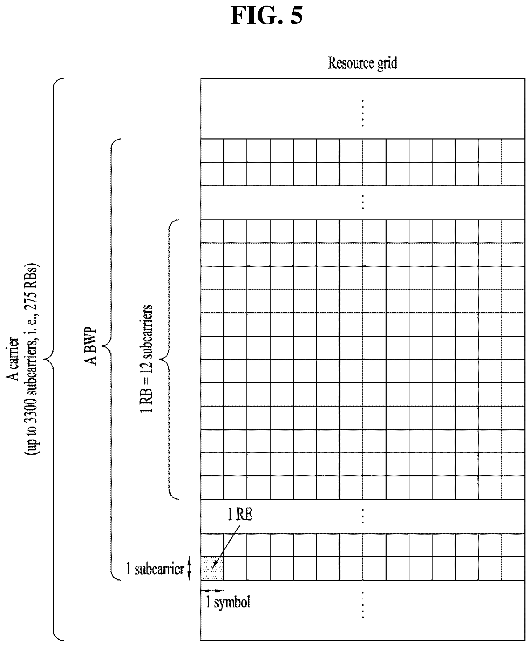

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* an SCS configuration *u,* and a transmission link (DL or UL). The carrier bandwidth *N*^{size,u}_{grid} for the SCS configuration *u* is given to the UE by a higher layer parameter (e.g. RRC parameter). Each element in the resource grid for the antenna port *p* and the SCS configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the SCS configuration *u*. The center of subcarrier 0 of CRB 0 for the SCS configuration *u* is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

**[Table 3]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to an HARQ-ACK codebook. In particular, a bit sequence in which HARQ-ACK information bits are arranged according to a predetermined rule is called an HARQ-ACK codebook.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.
- Link recovery request (LRR)

In the present disclosure, for convenience, PUCCH resources configured/indicated for/to the UE by the BS for HARQ-ACK, SR, and CSI transmission are referred to as an HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). The table below shows the PUCCH formats. The PUCCH formats may be divided into short PUCCH formats (formats 0 and 2) and long PUCCH formats (formats 1, 3, and 4) according to PUCCH transmission length.

**[Table 4]**

| PUCCH format | Length in OFDM symbols N^{PUCCH}_{symb} | Number of bits | Usage | Etc. |
|---|---|---|---|---|
| 0 | 1-2 | =<2 | HARQ, SR | Sequence selection |
| 1 | 4-14 | =<2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM(no UE multiplexing) |
| 4 | 4-14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}.
- PUCCH resource set #0, if the number of UCI bits =< 2
- PUCCH resource set #1, if 2< the number of UCI bits =< N₁
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 4).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

If cyclic redundancy check (CRC) of a corresponding DCI format is scrambled with the CS-RNTI provided by the RRC parameter *cs-RNTI,* and a new data indicator field for an enabled transport block is set to 0, the UE validates, for scheduling activation or scheduling release, a DL SPS assignment PDCCH or a configured UL grant Type 2 PDCCH. Validation of the DCI format is achieved if all fields for the DCI format are set according to Table 5 and Table 6. Table 5 shows an example of special fields for DL SPS and UL grant Type 2 scheduling activation PDCCH validation, and Table 6 shows an example of special fields for DL SPS and UL grant Type 2 scheduling release PDCCH validation.

**[Table 5]**

| | DCI format 0_0/0_1 | DCI format 1_0 | DCI format 1_1 |
|---|---|---|---|
| HARQ process number | set to all '0's | set to all '0's | set to all '0's |
| Redundancy version | set to '00' | set to '00' | For the enabled transport block: set to '00' |

**[Table 6]**

| | DCI format 0_0 | DCI format 1_0 |
|---|---|---|
| HARQ process number | set to all '0's | set to all '0's |
| Redundancy version | set to '00' | set to '00' |
| Modulation and coding scheme | set to all '1's | set to all '1's |
| Resource block assignment | set to all '1's | set to all '1's |

Actual DL assignment and UL grant for DL SPS or UL grant Type 2, and a corresponding MCS are provided by resource assignment fields (e.g., a TDRA field providing a TDRA value m, an FDRA field providing frequency resource block assignment, and/or an MCS field) in the DCI format carried by a corresponding DL SPS or UL grant Type 2 scheduling activation PDCCH. If validation is achieved, the UE considers information in the DCI format as valid activation or valid release of DL SPS or configured UL grant Type 2.

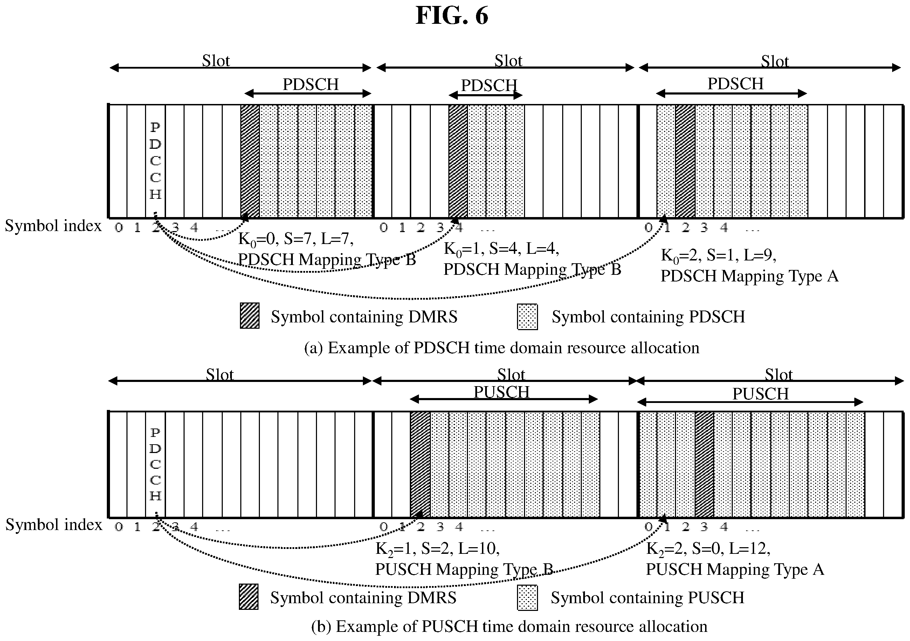

FIG. 6 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value *m* for a row index *m*+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator value *SLIV* (or directly, a start position (e.g., starting symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., starting symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the starting symbol *S* relative to the start of the slot with the PDSCH or PUSCH and the number of consecutive symbols, *L*, counting from the symbol S. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in the present disclosure, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

In the present disclosure, a PDSCH based on DL SPS may be referred to as an SPS PDSCH, and a PUSCH based on a UL configured grant (CG) may be referred to as a CG PUSCH. A PDSCH dynamically scheduled by DCI carried on a PDCCH may be referred to as a dynamic grant (DG) PDSCH, and a PUSCH dynamically scheduled by DCI carried by on a PDCCH may be referred to as a DG PUSCH.

A PDCCH is transmitted through a control resource set (CORESET). One or more CORESETs may be configured for the UE. The CORESET consists of a set of PRBs with a duration of 1 to 3 OFDM symbols. The PRBs and a CORESET duration that constitute the CORESET may be provided to the UE through higher layer (e.g., RRC) signaling. A set of PDCCH candidates in the configured CORESET(s) is monitored according to corresponding search space sets. In the present disclosure, monitoring implies decoding (called blind decoding) each PDCCH candidate according to monitored DCI formats. A master information block (MIB) on a PBCH provides parameters (e.g., CORESET#0 configuration) for monitoring a PDCCH for scheduling a PDSCH carrying system information block 1 (SIB1) to the UE. The PBCH may also indicate that there is no associated SIB1. In this case, the UE may be provided with not only a frequency range in which the UE may assume that there is no SSB associated with SSB1 but also other frequencies to search for an SSB associated with SIB1. CORESET #0, which is a CORESET for scheduling SIB1 at least, may be configured by the MIB or dedicated RRC signaling.

A set of PDCCH candidates monitored by the UE is defined in terms of PDCCH search space sets. The search space set may be a common search space (CSS) set or a UE-specific search space (USS) set. Each CORESET configuration is associated with one or more search space sets, and each search space set is associated with one CORESET configuration.

A set of PDCCH candidates may be monitored in one or more CORESETs on an active DL BWP of each activated serving cell to which PDCCH monitoring is configured. Here, the monitoring refers to receiving each PDCCH candidate and decoding according to monitored DCI formats. The following table illustrates a DCI format that PDCCH may carry.

**[Table 7]**

| **DCI format** | **Usage** |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying a group of UEs of PRB(s) and OFDM symbol(s) where UE cancels the corresponding UL transmission from the UE |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH. For a CSS, DCI format 0_0 and DCI format 1_0 have fixed sizes after the BWP size is initially given by RRC. For a USS, DCI format 0_0 and DCI format 1_0 are fixed in size in fields other than a frequency domain resource assignment (FDRA) field, and the FDRA field may vary in size by configuration of a related parameter by the BS. In DCI format 0_1 and DCI format 1_1, the size of the DCI field may be changed by various RRC reconfigurations by the BS. DCI format 2_0 may be used to provide dynamic slot format information (e.g., SFI DCI) to the UE, DCI format 2_1 may be used to provide DL pre-emption information to the UE, and DCI format 2_4 may be used to indicate a UL resource on which the UE needs to cancel UL transmission.

Typically, under the premise that a BS can be supplied with stable power, only various measures for saving power of a UE with limited available energy have been discussed and introduced. However, the need for energy saving in a network as well as a UE is increasing as the number of services and UEs that the network should support increases rapidly. Network energy saving is very important in environmental sustainability, environmental impact (greenhouse gas emissions, etc.) reduction, and operation cost down. As 5G is widely distributed in industrial and geographic areas, networks become denser and use more antennas, larger bandwidths, and more frequency bands as it processes advanced services and applications that require very high data speeds (e.g., XR). The impact of 5G on the environment needs to be continuously controlled, and new solutions need to be developed to improve network energy conservation.

Energy consumption has become a key part of Operating Expense (OPEX). According to a report by the Global System for Mobile Communications Association (GSMA), the energy cost of mobile networks accounts for ~23% of the total carrier cost. Most energy consumption occurs in wireless access networks, especially Active Antenna Units (AAU), and data centers and fiber optic transmissions account for less. The power consumption of wireless access may be divided into a dynamic part that is consumed only when data transmission and reception are in progress and a static part that is always consumed to maintain the necessary operation of a wireless access device even when data transmission and reception are not in progress. In particular, research and development on network energy consumption models for BS are needed.

In the following description, implementations of the present disclosure regarding the technology and configuration/operation in a cell/carrier domain that may be introduced for the purpose of the energy saving of a BS will be described.

In embodiments of the present disclosure described below, a cell may be interpreted according to context. For example, in some embodiments of the present disclosure, a cell may mean a serving cell or a specific carrier. Furthermore, in some embodiments of the present disclosure, a cell may consist of one DL Component Carrier (CC) and 0 to 2 UL CC(s), but embodiments described below are not limited thereto. A cell and a CC may be used interchangeably below (unless there is a separate distinction). Furthermore, the embodiments described below may be applied by replacing a cell/CC with an (active) BWP in a serving cell. Furthermore, in implementations described below, a cell/CC may be used as a concept encompassing PCell, SCell, PSCell, etc., which may be configured/represented in a Carrier Aggregation (CA)/Double Connectivity (DC) scenario.

Implementations 1 to 11 of the present disclosure described below may be applied alone or in combination with two or more.

### * Implementation 1) Network Energy Saving (NES) mode

An NES mode of a BS, i.e., a mode for energy saving of a BS may be defined. The BS operating in the NES mode may suspend/hold off a DL or UL transmission for a specific time period, and power consumption of the BS may be reduced by limiting a transmission/reception operation on a specific frequency band. In the present disclosure, the NES mode may be collectively referred to as an operation mode of a BS and/or UE defined/configured/indicated for this purpose.

The NES mode may be maintained only in a specific time period. In embodiments of the present disclosure to be described below, a time period operating in an NES mode is expressed as an NES duration. In some embodiments, an NES mode may be valid only for a specific frequency resource. Hereinafter, the frequency resource corresponding to the NES mode will be referred to as an NES band.

The corresponding NES mode may be configured by a BS through a separate higher layer (e.g., RRC) configuration/signaling, or may be dynamically configured for a BS/UE through other control channels (e.g., PDCCH/DCI-based indication), data channels (e.g., PDSCH, PUSCH). The BS may turn on/off a specific time, a specific frequency, a specific antenna resource, and the like during the corresponding NES mode, and may not transmit/receive a data channel, control channel, or control signal related thereto. The UE may operate with the expectation that a specific time/frequency/antenna resource, etc. may be turned on/off during the corresponding NES mode, and a related channel/signal is not transmitted.

A BWP (hereinafter, referred to as an NES BWP) for an NES mode may be defined and configured in a UE in which the NES mode is defined/configured. The NES BWP may be a separate BWP operating only in the NES mode, and in this case, the corresponding BWP may not be defined or may be deactivated in a non-NES mode. Alternatively, a specific (one) BWP may be configured differently in each of the NES mode and the non-NES mode. For example, a specific BWP may be configured as an NES-BWP during the NES duration period, and may be configured as a separate BWP (other than this) during other periods. A configuring method and limitations of the NES BWP may be defined and configured separately from the conventional BWP. For example, in an NES BWP, PDCCH monitoring is not performed but an aperiodic CSI-RS signal and report may be configured. For another example, periodicity of a periodic CSI-RS may be reinterpreted in an NES BWP.

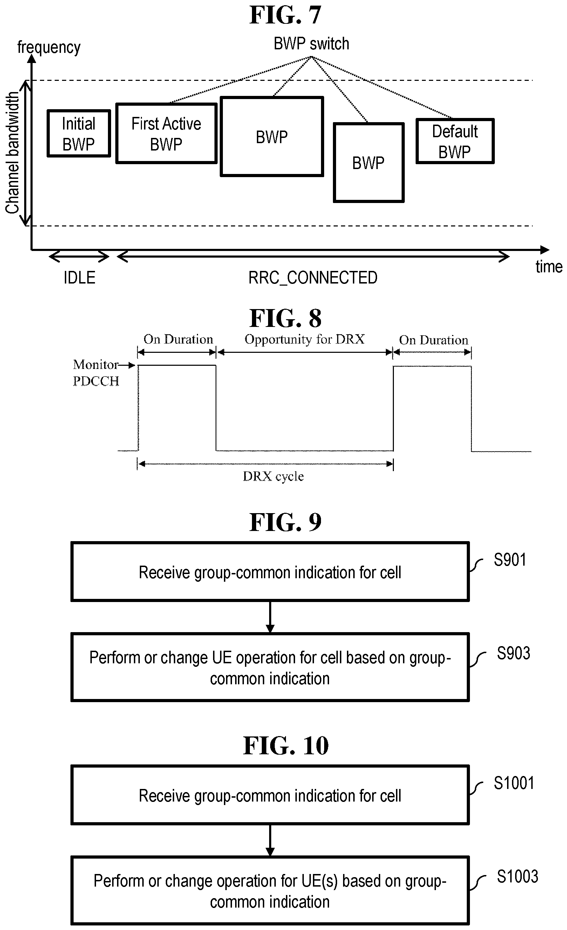

FIG. 7 illustrates bandwidth part types.

Serving cells may be configured with one or more BWPs. BWPs may be classified as follows: an initial BWP, a first active BWP, a default BWP, and a (regular) BWP. The initial BWP is used for a UE to perform an initial access process. When a UE transitions from an IDLE mode (e.g., RRC_IDLE) to a CONNECTED mode (e.g., RRC_CONNECTED), the UE may obtain information regarding CORESET#0 from a Master Information Block (MIB) carried by a PBCH, and search for a PDCCH, which used to schedule Remaining Minimum System Information (RMSI), in the CORESET#0. For example, an initial BWP is used to receive information before a UE accesses a network/BS. The initial BWP is mainly used to receive a System Information Block (SIB) and random access related information, and is generally used in RRC_IDLE. According to some scenarios, only one BWP may be active on a serving cell at a time. At a given time on each serving cell, one of the configured DL BWPs is referred to as an active DL BWP for that serving cell, and one of the configured UL BWPs is referred to as an active UL BWP for that serving cell. A first active BWP is an active BWP immediately after an initial access or PSCell/SCell addition is completed. *firstActiveDownlink-Id* and *firstActiveUplinkBWP-Id* in a serving cell configuration are used to indicate the first active BWP when PCell change, PSCell addition/change, or SCell addition is performed. BWP switching for a serving cell is used to activate an inactive BWP and deactivate an active BWP at a time. BWP switching may be controlled by a PDDCH indicating a DL assignment or a UL grant (e.g., a BWP indicated by a bandwidth part indicator in DCI format 0_1 or DCI format 1_1 is activated), an inactivity timer provided through a serving cell configuration (e.g., when the inactivity timer is configured for a serving cell, expiration of the inactivity timer associated with the serving cell causes switching an active BWP to a default BWP configured by a network), an RRC signaling, or a MAC entity upon initiation of a random access process or detection of a consistent Listen-Before-Talk (LBT) on SpCell. In the case of PCell, a BWP used for an initial access (e.g., an initial BWP) may be configured through system information. In the case of SCell(s), a BWP used after initial activation may be configured through dedicated RRC signaling. According to some scenarios (e.g., standards up to NR Rel-17), the remaining BWP(s) (i.e., the BWP(s) of PCell other than an initial BWP and BWP(s) of SCell(s)) are configured to a UE through dedicated RRC signaling, which is a signaling sent on a Dedicated Control Channel (DCCH) logical channel between a network and a single UE. Therefore, according to the standard regulations up to NR Rel-17, BWP switching is UE-specifically indicated/configured. On the contrary, in some implementations of the present disclosure, a unique BWP switching operation in an NES mode may be defined. For example, in a relate art BWP switching configuration/operation, a timer (e.g., an inactive timer) is set when a BWP other than a default BWP is an active BWP, and it returns to the default BWP when the corresponding timer expires. On the other hand, in some implementations of the present disclosure, in an NES mode, when a corresponding timer expires, it may switch to a dormant BWP or an NES BWP. Alternatively, when a timer expires, it may switch to a default BWP (like the conventional operation), and when a DL/UL transmission fails to occur (e.g., to be scheduled/configured) for a predetermined time in the default BWP, it may switch to a dormant BWP or an NES BWP. Here, the dormant BWP is one of DL BWPs configured by a network through dedicated RRC signaling. In the dormant BWP, a UE stops monitoring a PDCCH for/on the SCell, but continues to perform CSI measurements, Automatic Gain Control (AGC), and beam management. For each serving cell other than SpCell or PUCCH SCell, the network may configure one BWP as a dormant BWP.

Implementations of the present disclosure described below may apply independently under the conditions described in each implementation, may be configured to apply only for NES duration, or may apply only on an NES band.

In embodiments of the present disclosure to be described below, the term "dormant state" is not limited only to that a corresponding cell/BWP is in a dormant state (e.g., a dormant BWP). In the present disclosure, a dormant state may be construed differently according to a context. For example, a dormant state may mean a deactivated state of a specific cell, or may be construed as a specific state (e.g., NES mode, NES duration, NES band, NES BWP, etc.) for power/energy saving. Likewise, in the present disclosure, a non-dormant state may be construed differently according to a context. For example, a non-dormant state may mean an activated state of a specific cell, or may be construed as an operating state (e.g., non-NES BWP), etc. other than an NES mode.

### * Implementation 2) Group common indication for SCell

A specific operation (e.g., SCell dormancy indication) for a specific SCell may be configured/indicated (for a plurality of UEs) in a group common manner.

The SCell dormancy indication may reduce power consumption of a UE by changing an active BWP of a specific SCell (or a group of SCells) configured in a UE to a dormant BWP and limiting a PDCCH reception and the like in a corresponding dormant cell/BWP (for a period in which a data transmission/reception is not configured). The SCell dormancy indication provided by the conventional NR Rel-17 may be configured using a 'SCell dormancy indication' field such as DCI format 1_1 or the like by a method of changing an active BWP of each SCell configured for each UE to a dormant BWP (or may be indicated in units of SCell groups). The corresponding DCI is configured to each UE in a manner of being dedicated thereto.

Meanwhile, an SCell dormancy indication method using DCI format 2_6 was introduced in Rel-16. Since a corresponding DCI may be transmitted by a group common method, SCell (corresponding to a specific frequency) may be collectively changed to a dormant state for a plurality of UEs by using it. Yet, since the corresponding DCI format (i.e., DCI format 2_6) may provide an SCell dormancy indication only for an inactive time if DRX is configured (e.g., Long DRX configuration) and may be configured only if a specific condition is met, such as being applied only to a situation capable of a Wake-Up Signal (WUS) feature.

Since transmission/reception of a data channel such as PDSCH/PUSCH and transmission/reception of a control channel/signal such as PDCCH are not required in a dormant SCell, the corresponding features may be advantageous in terms of power/energy saving of a BS as well as power saving of a UE. If the BS switches an SCell corresponding to a specific frequency to a dormant state for a plurality of UEs at a time, power/energy of the BS required for transmission/reception at the corresponding frequency may be saved. However, if a DCI-based indication method supported by the existing NR is used, the BS should individually transmit a DCI including an SCell dormancy indication to all UEs for which the corresponding SCell is configured. Accordingly, a Group Common (GC) indication method capable of indicating/configuring an SCell dormancy indication to a plurality of UEs at a time may be introduced. The GC indication is not limited to a DCI-based indication. For example, the GC indication may be configured/indicated through a specific DCI or may be configured/indicated through higher layer signaling such as a MAC Control Element (CE), etc.

The GC indication may be equally configured/applied to SCell activation/deactivation. Alternatively, the GC indication may be configured/applied for the usage of GC-indicating BWP switching for the same specific cell. For example, if a cell of the same frequency resource is configured for all of a plurality of UEs, BWP switching for the cell may be indicated in a group common manner. In this case, the NES BWP described in Implementation 1 may be configured as the specific BWP. For example, if BWP #1 and BWP#2 are configured for UE#1 and BWP #1 and BWP#3 are configured for UE#2 and if a frequency resource of BWP#1 of UE#1 is the same as the frequency resource of BWP#1 of UE#2, BWP#1 is used as NES-BWP and UE#1 and UE#2 operate on BWP#2 and BWP#3 in a non-NES mode, respectively. In doing so, if UE#1 and UE#2 transition from the non-NES mode to an NES mode, both UE#1 and UE#2 may perform BWP switching to BWP#1. In this case, the BWP#1 may be configured as the specific BWP.

Accordingly, implementations of the present disclosure regarding a GC indication capable of indicating/configuring a configuration/operation regarding a specific SCell for a plurality of UEs will be described. Indication(s) regarding 'SCell dormancy' and/or 'SCell activation/deactivation' and/or 'BWP switching for a specific BWP' may be configured for a plurality of UEs through the corresponding GC indication.

A GC indication may be performed using one of the following.
> Method 1: A new DCI format and/or a new Radio Network Temporary Identifier (RNTI) for the same may be introduced for indication(s) regarding 'SCell dormancy' and/or 'SCell activation/deactivation' and/or 'BWP switching for a specific BWP'.
   >>Method 1-1: In a newly introduced DCI format, an indication field for all cell(s) (which may be configured for a DL/UL transmission of a BS that transmits a corresponding DCI) may be configured in the form of a bitmap. Each bit of the corresponding bitmap may mean an indication for each cell or an indication for each cell group (previously defined or configured (e.g., via higher layer signaling)).
   >> Method 1-2: In a newly introduced DCI format, an indication field for each cell (which may be configured for a DL/UL transmission of a BS that transmits a corresponding DCI) may be configured in the form of an index. In this case, the index used as a corresponding field value may be a value (e.g., frequency band name, carrier index, etc.) that all UE(s) may identify equally or a value uniquely assigned to each cell (e.g., cell index).
   >> The newly introduced DCI format may be CRC-scrambled with an RNTI (i.e., non-UE-specific) that may be monitored by a plurality of UEs. In addition, a cell-specific SS set (e.g., Type-3 CSS) may be configured for a PDCCH including the corresponding DCI. In other words, a DCI format for a GC indication according to some implementations of the disclosure may be transmitted/received in an SS set having a search space type set to "common", i.e., a CSS set, for the corresponding DCI format.
> Method 2: A field for a GC indication for the corresponding usage may be added to a group common DCI (e.g., DCI format 2_0) defined in the conventional NR.
   >> Method 2-2: An indication field for all cell(s) (which may be configured for a DL/UL transmission of a BS transmitting a corresponding DCI) may be configured in the form of a bitmap. Each bit of the corresponding bitmap may denote an indication for each cell or an indication for each cell group (previously defined or configured (e.g., via higher layer signaling)).
   >> Method 2-2: An indication field for each cell (which may be configured for a DL/UL transmission of a BS transmitting a corresponding DCI) may be configured in the form of an index. In this case, the index used as a corresponding field value may be a value (e.g., frequency band name, carrier index, etc.) that all UE(s) may identify equally or a value (e.g., a cell index) uniquely assigned to each cell.
>Method 3: DCI format 2_6 may be reused as a GC indication for the corresponding usage. To this end, a field indicating that DCI format 2_6 is configured as the corresponding GC indication may be configured in DCI format 2_6. For example, a 1-bit field for a NES mode configuration may be added to DCI format 2_6 and an NES mode may configured/indicated to be turned on/off through the corresponding field. In this case, for example, if a corresponding field value is 'on', an SCell dormancy indication (for example) may be provided to a plurality of UEs irrespective of the above-described conventional specific conditions related to the transmission/reception of DCI format 2_6.

In some implementations of the present disclosure, a bandwidth part indicator in DCI formats 0_1, 0_2, 1_1, and/or 1_2 may be used for an indication regarding 'BWP switching for a specific BWP'.

A corresponding GC indication may be implemented through a DCI-based indication like the method(s) 1/2/3 listed above, but is not limited thereto. The corresponding GC indication may be implemented through any DL channel and/or control signal that may be transmitted/configured for a plurality of UEs. For example, the corresponding GC indication may be provided to a plurality of UEs through signaling of MAC CE or the like.

### ** Relationship between the NES mode and the operation configured by the GC indication

When a BS configures the NES mode (described above), a GC DCI supported by the conventional NR may be used as a GC indication for the above usage during an NES duration.

When the BS configures the NES mode (described above), a GC DCI supported by the conventional NR may be used as a GC indication for the above usage for a frequency region (and/or an SCell corresponding thereto) corresponding to an NES band.

When the BS transmits the GC indication, a UE having received the same may determine that the corresponding indication is a configuration of an NES mode. For example, when a dormant state change for a specific SCell is GC-indicated through a specific DCI format, the UE (having received the GC indication) may set a timing point (e.g., slot) at which a corresponding PDCCH is received as a start timing point of an NES duration. In addition, when a non-dormant state change for a specific SCell is GC-indicated through a specific DCI format, the UE (having received the same) may set a timing point (e.g., slot) at which a PDCCH is received as an end timing point of the NES duration. Alternatively, in the above example, the start and end timing points of the NES duration may be configured based on a specific application delay after the UE has received the corresponding PDCCH. Alternatively, in the above example, the start and/or end timing points of the NES duration may be separately configured/indicated through a corresponding DCI. For example, the start and end timing points may be separately indicated through a corresponding DCI. Alternatively, the start timing point may be separately indicated through a corresponding DCI, and an interval between the start and end timing points may be configured/defined in advance.

### ** An application timing point of an operation configured by the GC indication

When a plurality of UEs change a specific SCell to a dormant/non-dormant state (or when activating/deactivating it or when BWP switching is performed) through a GC indication, an actual application (e.g., switching to a dormant BWP) timing point of each UE may be separately configured through a corresponding DCI. The application timing point configured separately may be set to a specific timing point through a System Frame Number (SFN) or a specific time like a slot index, or may be configured/indicated in the form of a relative time offset like a slot offset at a specific timing point (such as a corresponding DCI reception).

### ** ACK feedback on the GC indication

An ACK feedback for the GC indication may be defined. A UE configured with a corresponding GC indication may independently transmit an ACK to a BS. The BS may change or turn off a corresponding SCell (or a frequency resource corresponding thereto) to a dormant state when an ACK feedback is received from all UE(s) that the BS expects to apply an operation configured by a GC indication for a specific SCell. To a UE failing to send an ACK for a predetermined time, the same operation may be individually configured/indicated through a UE-dedicated DCI.

In another method, a UE may not send an ACK feedback for the GC indication. That is, a BS transmits the GC indication repeatedly a predefined/configured number of times, and at the same time, the BS may separately configure a timing point at which an operation according to a corresponding GC indication is applied. The UE having received the corresponding GC indication may perform the operation indicated by the GC indication from a separately defined/configured application timing point. If an operation application timing point is indicated through a DCI indicating the corresponding GC indication, the UE having received the DCI indicating the corresponding GC indication at a plurality of timing points may expect that a plurality of the timing points are the same or that an operation application timing point T1 indicated in a following DCI does not precede an operation application timing point T2 indicated in a DCI received previously (i.e., T1 >= T2).

### * Implementation 3) Dormant states of SpCell and PUCCH SCell

In the NR system, a dormant BWP cannot be configured for an SpCell (i.e., PCell or PSCell) and/or a PUCCH cell. That is, in these cells, an operation such as prohibiting a transmission of a data channel (e.g., PDSCH/PUSCH), stopping PDCCH monitoring, etc. cannot be configured. Yet, only for a UE in which an NES mode is configured (or for an NES duration or only for an NES band), a corresponding operation (which means an operation such as prohibiting PDCCH monitoring, prohibiting PUCCH transmission, etc., hereinafter expressed as a dormant state)) may be configured in these cells. For example, in an NES mode, a dormant BWP or an NES BWP may be configured for a corresponding cell.

When a corresponding cell is switched to a dormant state in an NES mode, all SCells associated therewith may enter the dormant state. For example, when a PUCCH SCell is switched to a dormant state (without separate signaling), all SCells associated with the corresponding PUCCH SCell may be switched to the dormant state. On the contrary, when all SCells connected/associated with the PUCCH SCell are switched to the dormant state, the corresponding PUCCH SCell may be switched to the dormant state (without separate signaling). Meanwhile, when a PUCCH cell and all SCells connected to the PUCCH cell are in the dormant state, the corresponding PUCCH cell may also be automatically switched to a non-dormant state when at least one of the corresponding SCells is indicated to be changed to a non-dormant BWP. Alternatively, when the PUCCH SCell is switched to the non-dormant state in the same situation, all SCells connected to the PUCCH SCell may be switched to the non-dormant state.

When an SpCell and/or a PUCCH SCell is switched to a dormant state (e.g., through a BWP switching indication), an operation/timing point for returning to a non-dormant state may be configured together. For example, when switching to a dormant state for these cells is configured, the corresponding cell may return to a non-dormant state (without separate signaling) after a 'specific time' that may be defined/configured in advance. In this case, the 'specific time' for returning to the non-dormant state may be configured by a method such as RRC, DCI, or the like. In some implementations, a conventional method of triggering BWP switching may also be applied to these cells.

In the corresponding method(s) and some implementations of the present disclosure, switching to a dormant state may mean switching to a dormant BWP or switching to an NES BWP. In addition, in the present disclosure, a dormant BWP may be applicable by being replaced with an NES BWP.

### * Implementation 4) Link/BM (Beam Management) of dormant SCell

In the conventional NR system, a Beam Failure Detection (BFD) and a Beam Failure Recovery (BFR) may be configured for a dormant BWP. Also, Periodic CSI (PCSI) reporting and/or a Semi-Persistent (SP) CSI reporting may be configured. However, an aperiodic CSI reporting is not configured. If the above persistent and/or semi-persistent CSI reporting is configured when a BWP of a specific cell is in a dormant BWP state, a UE should periodically perform a CSI measurement. Also, to this end, a BS should periodically transmit a CSI-RS signal on a corresponding cell. That is, when the corresponding cell continues in a dormant state for a long time, such a periodic signal transmission/reception and measurement may cause power consumption, and a power reduction effect may be expected by increasing a periodicity of a corresponding signal or holding off a corresponding signal transmission if necessary (for example, when an NES mode is configured).

To this end, a signal for a channel measurement may be transmitted/received and a CSI measurement may be configured only, during a specific time period before a specific cell is switched from a dormant state to a non-dormant state. The corresponding specific time period may be defined or configured in advance (e.g., higher layer signaling). Specifically, when a specific cell is in a dormant state, a UE in which an NES mode is configured may expect that CSI reporting is not configured before a separately configured preparation time (or, a preparation period). Alternatively, even if CSI reporting is configured, the UE may ignore/drop it. The UE may perform configured CSI reporting during the corresponding preparation time when the corresponding cell is indicated/configured to be switched to a non-dormant state (or when a switching to a non-dormant state is triggered by a predefined/configured method).

Alternatively, aperiodic CSI reporting may be configured in a dormant state (e.g., a dormant BWP). For example, even when a UE does not monitor a PDCCH in a corresponding cell/BWP (e.g., even in a dormant BWP), CSI reporting for a corresponding SCell may be configured from a PCell. That is, even if aperiodic CSI reporting for the corresponding cell in the dormant state is triggered, the UE may perform a CSI measurement through a CSI-RS (and/or CSI Interference Measurement (CSI-IM)) on the corresponding cell and report a result on a PUSCH. When aperiodic CSI reporting is configured, periodic and/or semi-persistent CSI reporting that is configured in the corresponding cell/BWP in advance may be ignored. Alternatively, the BS and the UE may operate by reinterpreting the periodicity of corresponding periodic/semi-persistent CSI reporting to a larger value. Alternatively, even if aperiodic CSI reporting is configured, if periodic/semi-persistent CSI reporting is configured in the corresponding cell/BWP, CSI measurement and reporting may be performed through the same. Alternatively, the UE may expect that aperiodic CSI reporting is configured in a dormant state (e.g., dormant BWP) and periodic/semi-persistent CSI reporting is not.

### * Implementation 5) Dormant state switching between SUL and NUL

When a Supplementary UL (SUL) band is configured in a UE and simultaneous transmissions are not available on SUL and non-SUL bands, the UE may perform a UL transmission one either the SUL band or the non-SUL band at a specific timing point. Yet, a BWP for each of the SUL and non-SUL bands/cells may be configured independently.

In a scenario in which power saving such as an NES mode and the like is required, one of the two bands/cells may be configured as a dormant state in the above case. For example, when a UE, which is configured with an SUL band and is incapable of simultaneous transmissions on an SUL band and a non-SUL band, is configured (scheduled) with a UL transmission, a non-SUL band/cell may be switched to a dormant state (e.g., without separate signaling) (e.g., it may be changed to a dormant BWP). Likewise, when a UE, which is configured with an SUL band and is incapable of simultaneous transmissions on the SUL band and a non-SUL band, is configured (scheduled) with a UL transmission on the non-SUL band/cell, the SUL band/cell may be switched to a dormant state (without separate signaling) (e.g., it may be changed to a dormant BWP).

### * Implementation 6) A DL/UL BWP switching pair for Time Division Duplex (TDD) mode

In an operation of a UE configured with a TDD mode, a BWP switching operation is performed for a pair of DL BWP and UL BWP. That is, the DL BWP and the UL BWP are simultaneously switched with respect to one BWP switching configuration.

In a scenario in which power saving such as an NES mode and the like is important, switching of a DL BWP and switching of a UL BWP may be separately configured even in a TDD mode. That is, in some scenarios, a DL BWP and a UL BWP may be configured to be independently switched even in the TDD mode. For example, when a DL traffic is heavy and a UL traffic is light, an active DL BWP and an active UL BWP may be configured to be a non-dormant BWP and a dormant BWP for power saving of a BS/UE, respectively. In this state, when a UL transmission is intermittently required, the BS and/or the UE may independently switch only the UL BWP to the non-dormant BWP without switching the DL BWP. For another example, when both the active DL BWP and the active UL BWP are non-dormant BWPs and if a UL transmission is expected to be unscheduled, the BS and/or the UE may switch only the UL BWP to the dormant BWP without switching the DL BWP.

As another method, a pair of DL BWP and UL BWP may be configured as follows, and DL/UL BWP switching may be configured/indicated simultaneously.

**[Table 8]**

| | DL BWP | UL BWP |
|---|---|---|
| Index 0 | Non-dormant BWP index | Non-dormant BWP index |
| Index 1 | Non-dormant BWP index | Dormant BWP index |
| Index 2 | Dormant BWP index | Non-dormant BWP index |
| Index 3 | Dormant BWP index | Dormant BWP index |
| ... | ... | ... |

In this case, the DL/UL BWP pair may be configured/reconfigured to UE(s) by a method such as RRC, MAC CE, and/or the like, and each DL/UL BWP pair indication may be configured/indicated through signaling such as a separate DCI or the like. For example, it may be indicated through a field of a (GC) DCI that triggers the corresponding BWP switching (e.g., the index in Table 8). When it is not a DCI-based trigger (e.g., in the case of BWP switching triggered through the expiration of a timer, etc.), a specific DL/UL BWP pair may be defined/configured as a default DL/UL BWP.

### * Implementation 7) UE-specific NES BWP

### ** 7-1. BWP switching indication (from or to NES BWP) via scheduling DCI

> If an NES BWP is defined at a level equivalent to the conventional BWP (e.g., if a total of four non-NES and NES BWPs can be configured), BWP switching may be indicated using a conventional (2-bit) BWP indicator.
   >> It may be switched to an NES mode through BWP switching. That is, when switched to an NES BWP, it may mean entering an NES mode. In a reversed case, it may mean ending the NES mode.
   >> When switched to an NES mode via another indication:
      >>> When the NES mode is ended, a BS and a UE return to a just previous non-NES BWP or a default BWP (or firstActive BWP, initial BWP).
      >>> In this case, a switching indication for the NES mode is used as a BWP switching indication.
> In other cases (e.g., when an existing BWP is used with a different configuration in an NES mode), a 1-bit indicating that it is for NES usage may be required. That is, for one BWP (i.e., for one BWP index), when different BWP configurations are provided for the NES mode and in the non-NES mode, respectively, a 1-bit indicating that it is for NES usage may be required.
   >> In this case, switching to the NES mode may be possible through the 1-bit.
   >> The NES BWP may be associated with one of the non-NES BWP(s). For example, BWP IDs of the corresponding two BWPs may be the same.
> If a maximum of one NES BWP may be configured per UE, when changed to an NES mode, it may be automatically switched to the NES BWP.
> If there are two or more NES BWP per UE, an index of a BWP to be switched (i.e., switched-to) between the two BWPs may be indicated through BWP switching, or a switched-to BWP may be designated by a pre-defined rule.
   >> For example, (non-NES) BWP-specific NES BWP switching (i.e., select an NES BWP overlapping with (or close to) a non-NES BWP). For example, if BWP #1 for non-NES and BWP#2 for NES and BWP#3 for NES are configured for a UE and non-NES is switched to NES through BWP switching (and if BWP#2 or BWP#3 is not indicated at this time and is indicated to switch to BWP for NES), it may be switched to BPW close to BWP#1, which is selected from BWP#2 and BWP#3, according to a predefined rule.

### ** 7-2. NES BWP switching (from or to NES BWP) indication through non-scheduling DCI

> DCI Configuration: A partial/specific field of an existing scheduling DCI is filled with 0 (or 1) by the same method of configuring a DCI field of a standalone SCell dormancy DCI or an SPS release DCI or other/specific field may be reused for the purpose of an indication of switching to NES BWP.
> HARQ ID (i.e., HARQ process number) may be reinterpreted in the same way as the DCI field configuration method of the SPS release DCI, or reused (i.e., DCI that indicates the switching to BWP is configured similarly to the field configuration method of the SPS release DCI) as a BWP switching method.

### * Implementation 8) Cell-specific NES BWP (or UE group-common NES BWP)

### ** 8-1. It applies to all UE(s) configured with a corresponding cell. That is, the same BWP is applied to UE(s) configured with the corresponding cell (for an NES mode).

> This may become a UE capability. For example, whether a cell-specific NES BWP is supported may be reported as a UE capability.
> Alternatively, it may be applied only to a UE group previously defined or configured through RRC signaling or the like. That is, the same BWP (for an NES mode) may be configured/applied to a plurality of UEs configured with a corresponding cell. A network may group UEs configured with the corresponding cell into a plurality of UE groups, configure a specific UE group as a target with a NES BWP only, and indicate/configure an operation such as BWP switching or the like. For example, a UE group may be defined/configured/indicated through a method such as grouping based on the purpose of distributing traffic load (load) of a BS/UE or a distance from a BS. In this case, a UE group index may be configured dedicatedly for each UE.

### ** 8-2. BWP switching to NES BWP may be configured/indicated using the GC indications described above.

> If there are two or more cell-specific NES BWPs (or UE group-common NES BWPs), a BWP ID indication may also be included in a corresponding signaling/command.

In addition, in switching between NES mode or non-NES mode, a timer may be introduced for BWP switching between a conventional normal BWP and an NES BWP.

In addition, a specific DL (or UL) cell/carrier to be switched to an NES BWP may be separately configured (through RRC signaling or the like). To this end, when BWP switching (from the NES BWP or to the NES BWP) through the above-described method(s) is indicated through DCI, (UE group-specific) scheduling DCI, or (UE group-specific) MAC CE configured for a GC indication, a (NES) BWP to be switched may be indicated by an index that may be commonly understood by UEs. For example, a band name and a carrier/cell index may be used as the corresponding index, or a bitmap capable of distinguishing a specific cell may be used for a BWP switching indication.

In addition, in order to reduce a BWP switching delay, a BWP for NES with a relatively small bandwidth (BW) in addition to an active BWP may be configured as a BWP that is always in an active state or dormancy.

Additionally, a BWP for NES may be always configured as a specific RB set or RB set group (or to include the corresponding RB set (group)) within an initial (or default) BWP.

Additionally, an initial BWP (hereinafter, BWP1) may be configured for a CONNECTED mode UE (as described in the conventional standard), and an initial BWP (hereinafter, BWP2) for an NES mode may be configured separately. In addition, the corresponding two initial BWPs (i.e., BWP1 and BWP2) may be configured as a subset of BWP1 (or BWP2) or BWP2 (or BWP1). For example, BWP1 (or, BWP2) may be configured as a predetermined percentage (e.g., 50%) of RBs or a predetermined number (e.g., N that may be predetermined or set in advance) of RBs among RBs constituting BWP1 (or BWP2) or BWP2 (or BWP1). In this case, in some implementations, the subset may be configured with contiguous RBs from the lowest/highest RB of a BWP including the subset.

Additionally, if a UE-specific BWP and a UE-common BWP are configured separately based on UE-common initial BWP information received through System Information Block Type 1 (SIB1) and a separate timer for an NES mode expires or a signaling/command to configure/indicate a specific NES mode (or NES BWP) to use/switch to is provided to UE(s), it may switch to a UE-common initial BWP to enable BS and UEs to operate.

### * Implementation 9) Differently apply configurations of proposed method(s) according to a DRX configuration

FIG. 8 illustrates a discontinuous reception (DRX) operation. In particular, FIG. 8 shows an example of a DRX cycle for a UE in an RRC_CONNECTED state.

The NR (e.g., Rel-17) standard specifies a DRX configuration/operation. Features of a DRX used for the purpose of reducing unnecessary power consumption of a UE are as follows. Regarding DRX, a structure (hereinafter, referred to as I-DRX) for a UE in an RRC_IDLE state and a structure (hereinafter, referred to as C-DRX) for a UE in the RRC_CONNECTED state are defined, respectively. Both of the DRX structures are designed to reduce unnecessary power consumption in other sections by defining a period (e.g., an active time period or an on-duration period), in which a UE may expect a reception of a DL signal, to occur periodically. For reference, in the case of a C-DRX, in the Rel-16 standard, a start position of the on-duration occurs periodically, and a size (i.e., a DRX cycle) of a configurable period may be determined/configured through higher layer signaling such as RRC signaling provided by a BS to a UE.

Referring to FIG. 8, a DRX cycle includes an On Duration and an Opportunity for DRX. The DRX cycle defines a time interval in which the On Duration is periodically repeated. The On Duration represents a time period in which the UE performs PDCCH monitoring to receive a PDCCH. If DRX is configured, the UE performs PDCCH monitoring during the On Duration. If there is a PDCCH successfully detected during the PDCCH monitoring, the UE activates an inactivity timer and maintains an awake state. On the other hand, if there is no PDCCH successfully detected during the PDCCH monitoring, the UE enters a sleep state after the on-duration ends. Therefore, if a DRX is configured, PDCCH monitoring/reception may be discontinuously performed in a time domain in performing a process and/or method according to implementation(s) of the present disclosure. For example, if a DRX is configured, a PDCCH reception occasion (e.g., a slot having a PDCCH search space) in the present disclosure may be discontinuously configured according to a DRX configuration. On the other hand, when a DRX is not configured, the UE may continuously perform the PDCCH monitoring/reception in the time domain. For example, when a DRX is not configured, a PDCCH reception occasion (e.g., a slot having a PDCCH search space) may be continuously configured. On the other hand, regardless of whether the DRX is configured, PDCCH monitoring may be limited in a time period configured as a measurement gap. DRX configuration information is received through higher layer (e.g., RRC) signaling, and whether to be DRX ON/OFF is controlled by a DRX command of a MAC layer. When the DRX is configured, as shown in FIG. 8, the UE may discontinuously perform the PDCCH monitoring.

In the present disclosure, DRX may mean C-DRX and/or I-DRX.

In the present disclosure, a period in which a UE (configured with DRX) may expect a reception of a DL signal during a DRX cycle is referred to as DRX active time (or 'on duration').

The method(s) of the above-described Implementations 1 to 8 may (characteristically) differ in whether or not to be configured/applied to a DRX active time and other time periods in the case of a UE configured with DRX (typically). For example, some implementations of the present disclosure described above may be applied/configured for the DRX active time and may not be applied/configured for other periods. On the contrary, some implementations of the present disclosure described above are not applied/configured for the DRX active time (e.g., BS and UE operate in a non-NES mode) and an NES mode operation may be applied/configured for other periods.

The method(s) of the above-described Implementations 1 to 8 may apply different configurations to a DRX active time and other periods in a DRX cycle in case of a UE configured with DRX (typically). For example, the NES BWP (described in Implementation 1) may be separately configured for the DRX active time and other time periods. Alternatively, the BWP switching and the SCell activation/deactivation operation through the group common indication (described in Implementation 2) may be differently configured/applied to the DRX active time and other time periods. Alternatively, in the DRX active time, UE(s) and BS may operate in an NES mode. In other periods, the UE(s) and BS may operate in a non-NES mode. Alternatively, it may operate vice versa.

The method(s) of the above-described Implementations 1 to 8 may be applied differently for each DRX configuration for a plurality of DRX configurations. That is, for some DRX configuration(s) (or when some DRX configuration(s) are provided to UE(s)), UE(s) and BS may operate in an NES mode. For other DRX configurations (or when other DRX configuration(s) are provided to UE(s)), the UE(s) and BS may operate in a non-NES mode. In this case, regarding a type of a DRX configuration (i.e., DRX configuration switching) among a plurality of the DRX configurations, (for example,) the UE receives N DRX configuration(s) through (UE-dedicated) RRC signaling and one of them may be configured/indicated to the UE through RRC signaling (or group common DCI (or MAC CE)). For example, while it operates as an NES BWP (or a non-NES BWP) according to DRX configuration #1, (as DRX configuration switching or the like is indicated), if it is changed to DRX configuration #2, the BWP may be changed to a non-NES BWP (or an NES BWP).

The method(s) of the above-described Implementations 1 to 8 may be applied differently for each DRX configuration with respect to a plurality of DRX configurations. For example, in some DRX configuration(s) (or when the corresponding some DRX configuration(s) is provided to UE(s)), a specific one of the above implementations may be applied/configured. In other DRX configuration(s) (or when the other DRX configuration(s) is provided to UE(s)), a different specific one of the above implementations may be applied/configured.

The method(s) of the above-described Implementations 1 to 8 may be configured/applied differently for each BWP. For example, in some BWPs (or when the corresponding some BWP is an active BWP), UE(s) and BS may operate in the NES mode. In other BWP (or when another BWP is an active BWP or when a BWP operating in the NES mode is changed to an active BWP), the UE(s) and BS may operate in the non-NES mode.

In Implementation 9 described above, the timer described in Implementation 1 and operating to fall back the BWP to the default BWP (or initial BWP or NES BWP) and the like, the timer for switching between the NES BWP and the non-NES BWP described in Implementation 8, the timer that can be introduced for selection/switching between the UE-specific BWP and the UE-common BWP, and the like may be held or (re)started during the NES mode (or non-NES mode). Alternatively, the corresponding timer may be held off during the DRX active time (or other time period).

Additionally, for example, during the NES mode (e.g., NES duration), the timer is held off without decreasing or increasing, and then a count operation may resume when the NES mode (e.g., NES duration) ends.

In addition, in some implementations, an SCS for determining a timer decreasing slot (i.e., an SCS determining a time unit for applying a timer) may be configured based on a smaller value between an SCS of a PDCCH (e.g., indicating NES mode switching) and an SCS of a PDSCH or PUSCH scheduled through the PDCCH. Alternatively, in some implementations, it may be configured based on a smallest SCS between an SCS of a PDCCH and an SCS of a PDSCH (or an SCS of a BWP in an active state and/or an SCS of a BWP in an inactive state).

In addition, when a plurality of cells are linked to a corresponding timer (and a related configuration/operation), the corresponding timer may be set/operated for each cell group (which may be configured in advance through RRC signaling, etc.).

In the aforementioned Implementation 9, when a plurality of cells are configured for a DRX-configured UE, in order to enable only some specific cell(s) of the cells configured for the UE to operate in an NES mode (or a non-NES mode), cells belonging to the same DRX configuration (or DRX group) are grouped in advance, and thus the timer may be configured to operate (e.g., increase/decrease/hold/(re)start) in a cell group unit.

### * Implementation 10) When BWP switching is indicated by a GC indication, HARQ-ACK feedback method related to the corresponding GC indication

BWP switching may be indicated through a UE Group-Common (GC) DCI as in Implementation 2 or Implementation 8. Since the existing DCI-based BWP switching is UE-specific and schedules a PDSCH or PUSCH (on a changed BWP) through the corresponding DCI, when a BS receives an HARQ-ACK feedback or PUSCH from a UE that has performed the BWP switching, the BS may determine whether to perform the BWP switching in the UE. On the other hand, if the BWP switching is indicated through the UE group-common DCI according to some implementations of the present disclosure, since data scheduling through the corresponding DCI may be difficult, it may be desirable for the BS to determine whether to perform the BWP switching through the corresponding DCI by defining an HARQ-ACK feedback corresponding to the GC DCI (separately).

PUCCH resources (or candidates thereof) for the usage of the HARQ-ACK feedback corresponding to the GC DCI may be configured for each UE. The PUCCH resources (or candidates thereof) may be located on a (changed) BWP (e.g., NES BWP) after performing the BWP switching, and may be configured as PUCCH format 0 and/or PUCCH format 1 in consideration of the fact that only ACK information is valid. Particularly, in the case of PUCCH format 0 (for a configured PUCCH or for each configured PUCCH resource), a single cyclic shift index is configured. When the UE transmits ACK information to the BS through the corresponding PUCCH format 0 after performing the BWP switching through the GC DCI, a corresponding configured cyclic shift index value may be applied. A timing at which the PUCCH is to be transmitted and/or one of a plurality of previously configured PUCCH candidate resources may be indicated through a specific field of the GC DCI. When a plurality of UEs receive the GC DCI in common and interpret the corresponding field (to prevent a plurality of the UEs from colliding on the same PUCCH resource), a method of interpreting the same code-point (e.g., PUCCH Resource Indicator (PRI) field, HARQ feedback timing indicator field, etc.) may be previously (differently) configured for each UE. For example, even if a code-point of '000' is signaled in a field corresponding to the timing at which the PUCCH is to be transmitted, it may be configured for the UE(s) (by the BS) in advance such that UE #1 may interpret it as an indication to transmit the PUCCH in slot n1 and that UE #2 may interpret it as an indication to transmit the PUCCH in slot n2

### * Implementation 11) BWP switching operation method of UE when BWP switching may be indicated by a GC indication and a UE-specific indication

BWP switching may be indicated through a UE Group-Common (GC) DCI (or MAC CE) as in Implementation 2 or Implementation 8. The existing (UE-specific) DCI-based BWP switching may also be indicated at the same time. When a UE simultaneously or at a close timing point receives GC DCI (or GC MAC CE) based BWP switching and existing DCI-based BWP switching, it may be unclear from the standpoint of the UE which DCI-based BWP switching should be performed.

Therefore, the ambiguity of the UE operation may be solved by determining a DCI (or MAC CE) as a reference by considering this. In this case, the UE may perform BWP switching based on one of the following options, and the corresponding one option may have rule defined in advance or may be configured by a BS.
> A UE performs BWP switching indicated by a DCI (or MAC CE) received last (or at the earliest timing point);
> The UE performs BWP switching (or BWP switching to NES BWP) indicated through a GC DCI (or GC MAC CE); or
> The UE performs BWP switching (or BWP switching to BWP rather than NES BWP) indicated through a UE-specific DCI.

Alternatively, a changing method between the BWP switching through the GC DCI (or GC MAC-CE) and the BWP switching through the UE-specific DCI may be defined/configured in advance. As a corresponding changing command, a specific field may be used for a DCI for scheduling a PDSCH (or PUSCH), or a separate DCI or MAC-CE may be used. For example, if the UE operating by the BWP switching through the GC DCI (or GC MAC-CE) is configured/indicated, through a separate DCI, to change to the BWP switching through the UE-specific DCI, the UE may operate by changing to the BWP switching through the UE-specific DCI after a predetermined delay (hereinafter, T_a), and vice versa. Alternatively, after the BWP switching through the GC DCI (or GC MAC-CE) is defined/configured as default BWP switching, if the UE receives a command for changing the BWP switching type, the UE may change to the BWP switching through the UE-specific DCI and then fall back to the BWP switching through the GC DCI (or GC MAC CE) after a "specific time" (hereinafter, T_b), and vice versa. Here, each of T_a and T_b may be previously defined or configured.

FIG. 9 illustrates a flow of a DL signal reception in a UE according to some implementations of the present disclosure.

The UE may perform operations according to some implementations of the present disclosure in association with a DL signal reception. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

In the UE, the processing device, the computer-readable (non-transitory) storage medium, and/or the computer program product, the operations may include receiving a UE group common indication for a cell (S901) and performing or changing a UE operation based on the UE group common indication (S903). In some implementations, the UE group common indication may include a group common indication regarding 'SCell dormancy', 'SCell activation/deactivation', or 'BWP switching for a specific BWP'. For example, the UE may change an active BWP of the cell to a dormant state based on the group common indication regarding the 'SCell dormancy' for the cell. For another example, the UE may activate or deactivate the cell based on the group common indication regarding the activation or the deactivation for the cell. For another example, the UE may include switching the active BWP of the cell to another BWP based on the group common indication regarding the BWP switching for the specific BWP of the cell.

In some implementations, the operations may include: performing PDCCH monitoring; detecting a DCI format for a cell in which a first BWP is active based on the PDCCH monitoring; and performing BWP switching to switch the active BWP of the cell from the first BWP to a second BWP based on the DCI format containing a switching-related indication.

In some embodiments, the DCI format including the switching-related indication may be detected only in a common search space, not in a search space specific to the UE. For example, the DCI format may be detected only in the search space configured as a CSS.

In some implementations, the DCI format may include information regarding a timing point for the BWP switching.

In some implementations, the operations may include: receiving an RRC configuration for the DCI format. The RRC configuration may include a configuration regarding an NES BWP. In some implementations, the second BWP may include the NES BWP.

In some implementations, the operations may include: receiving an HARQ-ACK feedback related configuration for the DCI format. The HARQ-ACK feedback related configuration may include a configuration regarding a PUCCH resource related to the DCI format.

In some implementations, the PUCCH resource may be dedicated to the UE. For example, the PUCCH resource may be provided to the UE through a dedicated PUCCH configuration.

In some implementations, the DCI format may include information related to a timing of transmitting HARQ-ACK information for the DCI format.

FIG. 10 illustrates a flow of a DL signal transmission in a BS according to some embodiments of the present disclosure.

The BS may perform operations according to some implementations of the present disclosure in association with a DL signal transmission. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

In the BS, the processing device, the computer-readable (non-transitory) storage medium, and/or the computer program product, the operations may include transmitting a UE group common indication for a cell (S1001) and performing or changing an operation for UE(s) on the cell based on the UE group common indication (S 1003). In some implementations, the UE group common indication may be a group common indication regarding 'SCell dormancy', 'SCell activation/deactivation', or 'BWP switching for a specific BWP'. For example, if the UE group common indication for the cell is a group common indication regarding the 'SCell dormancy' for the cell, the BS may change an active BWP of the cell to a dormant state for a plurality of UEs and stop PDCCH transmissions for a plurality of UEs on a dormant BWP. For another example, if the UE group common indication for the cell is a group common indication regarding the activation or the deactivation of the cell, a DL transmission and/or a UL reception may be performed or stopped on the assumption that the cell is in an activated or deactivated state for a plurality of the UEs. For another example, if the UE group common indication for the cell is a group common indication regarding BWP switching of the cell, an active BWP of the cell may be switched to another BWP.

In some embodiments, the operations may include: transmitting a PDCCH carrying a DCI format for a cell in which a first BWP is active; performing BWP switching to change an active BWP of the cell from the first BWP to a second BWP based on the DCI format including a switching related indication. The DCI format including the switching related indication may be transmitted only in a common search space, not in a search space specific to the UE.

In some embodiments, the DCI format including the switching related indication may be transmitted only in a common search space, not in a search space specific to the UE. For example, the DCI format may be transmitted only in a search space configured as a CSS.

In some implementations, the DCI format may include information on a timing point for the BWP switching.

In some implementations, the operations may include transmitting an RRC configuration for the DCI format. The RRC configuration may include a configuration regarding an NES BWP. In some implementations, the second BWP may be the NES BWP.

In some implementations, the operations may include transmitting an HARQ-ACK feedback related configuration for the DCI format. The HARQ-ACK feedback related configuration may include a configuration regarding a PUCCH resource related to the DCI format.

In some implementations, the PUCCH resource may be dedicated to the UE. For example, the PUCCH resource may be provided to the UE through a dedicated PUCCH configuration.

In some implementations, the DCI format may include information related to a timing of transmitting HARQ-ACK information for the DCI format.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method of receiving a downlink signal by a user equipment in a wireless communication system, the method comprising:
performing Physical Downlink Control Channel (PDCCH) monitoring;
detecting a Downlink Control Information (DCI) format for a cell having a first Bandwidth Part (BWP) active therein based on the PDCCH monitoring; and
performing BWP switching to switch an active BWP of the cell from the first BWP to a second BWP based on the DCI format including a switching related indication,
wherein the DCI format including the switching related indication is detected not in a search space specific to the user equipment but in a common search space only.

2. The method of claim 1, wherein the DCI format includes information regarding a timing point for the BWP switching.

3. The method of claim 1, comprising:
receiving a Radio Resource Control (RRC) configuration for the DCI format,
wherein the RRC configuration includes a configuration regarding a Network Energy Saving (NES) BWP, and
wherein the second BWP comprises the NES BWP.

4. The method of claim 1, comprising:
receiving a Hybrid Automatic Repeat request-Acknowledgement (HARQ-ACK) feedback related configuration for the DCI format,
wherein the HARQ-ACK feedback related configuration comprises a configuration regarding a Physical Uplink Control Channel (PUCCH) resource related to the DCI format, and
wherein the PUCCH resource is dedicated to the user equipment.

5. The method of claim 4, wherein the DCI format includes information related to a timing of transmitting HARQ-ACK information for the DCI format.

6. A user equipment receiving a downlink signal in a wireless communication system, the user equipment comprising:
at least one transceiver;
at least one processor; and
at least one computer memory operably connected to the at least one processor and storing instructions causing the at least one processor to perform operations when executed, the operations comprising:
performing Physical Downlink Control Channel (PDCCH) monitoring;
detecting a Downlink Control Information (DCI) format for a cell having a first Bandwidth Part (BWP) active therein based on the PDCCH monitoring; and
performing BWP switching to switch an active BWP of the cell from the first BWP to a second BWP based on the DCI format including a switching related indication,
wherein the DCI format including the switching related indication is detected not in a search space specific to the user equipment but in a common search space only.

7. An apparatus for processing in a wireless communication system, the apparatus comprising:
at least one processor; and
at least one computer memory operably connected to the at least one processor and storing instructions causing the at least one processor to perform operations when executed, the operations comprising:
performing Physical Downlink Control Channel (PDCCH) monitoring;
detecting a Downlink Control Information (DCI) format for a cell having a first Bandwidth Part (BWP) active therein based on the PDCCH monitoring; and
performing BWP switching to switch an active BWP of the cell from the first BWP to a second BWP based on the DCI format including a switching related indication,
wherein the DCI format including the switching related indication is detected not in a search space specific to the user equipment but in a common search space only.

8. A storage medium readable by a computer, the storage medium storing at least one computer program code including instructions causing at least one processor to perform operations when executed, the operations comprising:
performing Physical Downlink Control Channel (PDCCH) monitoring;
detecting a Downlink Control Information (DCI) format for a cell having a first Bandwidth Part (BWP) active therein based on the PDCCH monitoring; and
performing BWP switching to switch an active BWP of the cell from the first BWP to a second BWP based on the DCI format including a switching related indication,
wherein the DCI format including the switching related indication is detected not in a search space specific to the user equipment but in a common search space only.

9. A method of transmitting a downlink signal to a user equipment by a base station in a wireless communication system, the method comprising:
transmitting a Physical Downlink Control Channel (PDCCH) carrying a Downlink Control Information (DCI) format for a cell having a first Bandwidth Part (BWP) active therein; and
performing BWP switching to switch an active BWP of the cell from the first BWP to a second BWP based on the DCI format including a switching related indication,
wherein the DCI format including the switching related indication is detected not in a search space specific to the user equipment but in a common search space only.

10. A base station transmitting a downlink signal to a user equipment in a wireless communication system, the base station comprising:
at least one transceiver;
at least one processor; and
at least one computer memory operably connected to the at least one processor and storing instructions causing the at least one processor to perform operations when executed, the operations comprising:
transmitting a Physical Downlink Control Channel (PDCCH) carrying a Downlink Control Information (DCI) format for a cell having a first Bandwidth Part (BWP) active therein; and
performing BWP switching to switch an active BWP of the cell from the first BWP to a second BWP based on the DCI format including a switching related indication,
wherein the DCI format including the switching related indication is detected not in a search space specific to the user equipment but in a common search space only.

11. The base station of claim 10, wherein the DCI format includes information regarding a timing point for the BWP switching.

12. The base station of claim 10, wherein the operations comprise:
receiving a Radio Resource Control (RRC) configuration for the DCI format,
wherein the RRC configuration includes a configuration regarding a Network Energy Saving (NES) BWP, and
wherein the second BWP comprises the NES BWP.

13. The base station of claim 10, wherein the operations comprise:
receiving a Hybrid Automatic Repeat request-Acknowledgement (HARQ-ACK) feedback related configuration for the DCI format,
wherein the HARQ-ACK feedback related configuration comprises a configuration regarding a Physical Uplink Control Channel (PUCCH) resource related to the DCI format, and
wherein the PUCCH resource is dedicated to the user equipment.

14. The base station of claim 13, wherein the DCI format includes information related to a timing of transmitting HARQ-ACK information for the DCI format.
